(19) Europäisches Patentamt
European Patent Office
Office européen des brevets

(11) Veröffentlichungsnummer: **0 433 808 A2**

# (12) EUROPÄISCHE PATENTANMELDUNG

(21) Anmeldenummer: **90123610.9**

(22) Anmeldetag: **08.12.90**

(51) Int. Cl.5: **C08K 5/29**, C08K 5/3442, C08L 11/00

(30) Priorität: **22.12.89 DE 3942463**

(43) Veröffentlichungstag der Anmeldung:
**26.06.91 Patentblatt 91/26**

(84) Benannte Vertragsstaaten:
**DE FR GB**

(71) Anmelder: **BAYER AG**

**W-5090 Leverkusen 1 Bayerwerk(DE)**

(72) Erfinder: **Musch, Rüdiger, Dr.**
**Altenberger Domstrasse 169**
**W-5060 Bergisch-Gladbach 2(DE)**
Erfinder: **Schubart, Rüdiger, Dr.**
**An der Engelsfuhr 27**
**W-5060 Bergisch-Gladbach 2(DE)**

(54) **Verfahren zur Vulkanisation von Polychloropren.**

(57) Die Metalloxid-Vulkanisation von Polychloropren in Gegenwart von Verbindungen mit Amidinstruktur, aber in Abwesenheit von Magnesiumoxid, führt zu Vulkanisaten mit hoher thermischer Belastbarkeit - selbst bei dynamischer Beanspruchung.

EP 0 433 808 A2

# VERFAHREN ZUR VULKANISATION VON POLYCHLOROPREN

Die Erfindung betrifft ein Verfahren zur Vulkanisation von Polychloropren in Gegenwart von Verbindungen mit Amidinstruktur und in Abwesenheit von Magnesiumoxid. Die erfindungsgemäß erhaltenen Vulkanisate zeichnen sich durch eine verringerte Neigung zu unerwünschter Nachvulkanisation aus.

Polychloroprene lassen sich bekanntlich durch Behandlung mit Diaminen, Diphenolen, Thioharnstoffen, Metalloxiden etc. vulkanisieren. In der Regel hat man zwischen schwefelmodifizierten und nicht-schwefelmodifizierten Typen zu unterscheiden: Bei den erstgenannten ist nämlich die alleinige Verwendung von Metalloxiden meistens ausreichend, wogegen aufgrund der geringeren Vernetzungstendenz der nicht-schwefelmodifizierten Polychloroprene neben den ebenfalls erforderlichen Metalloxiden zusätzlich der Einsatz von speziellen Vulkanisationsbeschleunigern erforderlich ist; vgl. W. Hofmann, Vulkanisation & Vulkanisationshilfsmittel, Verlag Berliner Union GmbH, Stuttgart 1965, S. 274.

Als Metalloxide setzt man üblicherweise Zinkoxid als Vernetzungsmittel und Magnesiumoxid vorwiegend als Chloracceptor ein. Die alleinige Verwendung von Zinkoxid führt zu raschem Vulkanisationsbeginn, aber zu einer ungenügenden Vernetzung. Die alleinige Verwendung von Magnesiumoxid führt zwar zu sicherer Verarbeitbarkeit, aber zu einem sehr langsamen Vulkanisationsverlauf und zu niedrigen Vulkanisationsgraden. Bei gleichzeitiger Verwendung von Magnesiumoxid und Zinkoxid erhält man eine synergistische Vulkanisierwirkung und bei geeignetem Mischungsverhältnis eine ausgewogene Kombination von Anvulkanisationszeit und erreichbarem Vulkanisationsgrad.

Sowohl bei schwefelmodifizierten als auch bei nichtschwefelmodifizierten Polychloroprenen wird normalerweise das Optimum des Vulkanisationsgrades nicht erreicht; vielmehr findet eine allmählich ablaufende Nachvernetzung statt, die auch als Grund für das Alterungsverhalten von Polychloroprenvulkanisaten - vorzugsweise bei hoher thermischer Belastung und insbesondere bei zusätzlicher dynamischer Beanspruchung - anzusehen ist.

Überraschenderweise wurde nun gefunden, daß die Polychloroprenvulkanisation durch die Gegenwart von Amidin und von Metalloxid, das frei von Magnesiumoxid ist, günstig beeinflußt wird: Die resultierenden Vulkanisate altern weniger stark, was an einem verringerten Abfall der mechanischen Eigenschaften zu erkennen ist.

Gegenstand der Erfindung ist also ein Verfahren zur Vulkanisation von Polychloropren in Gegenwart von

1) 0,5 bis 20 Gew.-% Metalloxid, wobei das Metall bevorzugt aus den Gruppen IIa und IIb des Periodensystems ausgewählt ist, und

2) organischem Vulkanisationsbeschleuniger,

dadurch gekennzeichnet, daß

a) das Metalloxid 1) frei von Magnesiumoxid ist und

b) der organische Vulkanisationsbeschleuniger 0,1 bis 10 Gew.-%, bevorzugt 0,2-6 Gew.-% mindestens einer Verbindung mit Amidinstruktur enthält,

wobei sich die Prozentangaben jeweils auf Polychloropren beziehen.

Polychloroprene im Sinne der Erfindung sind Chloroprenpolymerisate, die neben polymerisierten 2-Chloropreneinheiten 0,05 bis 30, vorzugsweise 0,1 bis 20 Gew.-%, bezogen auf Chloroprenpolymerisat, copolymerisierte Einheiten anderer ethylenisch ungesättigter Monomerer oder Schwefel enthalten können, also Polychloroprene, wie sie beispielsweise in "Methoden der Organischen Chemie" (Houben-Weyl) Bd. E20/2, 842-859, Georg Thieme Verlag, Stuttgart - New York 1987, beschrieben sind.

Sie besitzen im allgemeinen Mooney-Viskositäten (nach DIN 53 523) von 5 bis 140, vorzugsweise von 10 bis 120, (ML 1+4)/100° C und Glasübergangstemperaturen von unter -25° C.

Bevorzugte, mit Chloropren copolymerisierbare, ethylenisch ungesättigte "andere Monomere" sind im wesentlichen 2,3-Dichlorbutadien und 1-Chlorbutadien. Schwefelmodifizierte Polychloroprene sind bevorzugt.

Die Menge an elementarem Schwefel, die für die Herstellung schwefelmodifizierten Polychloroprens verwendet wird, beträgt 0,05 bis 1,5, vorzugsweise 0,1 bis 1, Gew.-%, bezogen auf eingesetzte Monomere. Bei der Verwendung von Schwefelspendern ist deren Menge so zu bemessen, daß der freiwerdende Schwefel den oben angegebenen Mengen entspricht.

Die Polychloroprene können unvernetzt, d.h. Toluol-löslich, oder vernetzt sein. Die Vernetzung kann durch erhöhten Monomerumsatz oder durch Zusatz vernetzend wirkender Monomerer bei der Polymerisation erreicht werden.

Die Herstellung der Polychloroprene kann auf an sich bekannte Weise, z.B. durch Emulsionspolymerisation bei 0 bis 70° C, vorzugsweise bei 5 bis 50° C erfolgen.

Zur Viskositätsregelung der Polychloroprene kann die Herstellung in Gegenwart üblicher Kettenübertragungsmittel wie Mercaptane, wie sie z.B. in DE-OS 30 02 711, GB-PS 1 048 235, FR-PS 2 073 106 beschrieben sind, oder wie Xanthogendisulfide, wie sie z.B. in der DE-AS 1 186 215, in den DE-OS 21 56 453, 23 06 610 und 30 44 811, in der EP-PS 53 319, in den GB-PS 512 458 und 952 156 und in den US-PS 2 321 693 und 2 567 117 beschrieben sind, erfolgen.

Bei schwefelmodifizierten Polychloroprenen kann die gewünschte Viskosität durch Verwendung üblicher Peptisationsmittel, wie sie beispielsweise in den DE-OS 1 911 439, 2 018 736, 2 755 074 und 3 246 748, in der DE-PS 2 645 920, in den EP-A 21 212 und 200 857, in der FR-PS 1 457 004 und in den US-PS 2 264 713, 3 378 538, 3 397 173 und 3 507 825 beschrieben sind, eingestellt werden.

Die Polychloroprene können selbstverständlich auch aus Mischungen verschiedener Chloroprenpolymerisate bestehen.

Die überwiegende Mehrzahl der bekannten, käuflich erwerbbaren Polychloropren-Typen ist in "The Synthetic Rubber Manual", 11. Aufl., Internat. Institute of Synthetic Rubber Producers, Inc., Houston/Texas, 1989 aufgeführt.

Für das erfindungsgemäße Verfahren bevorzugtes Metalloxid 1) ist Zinkoxid.

Für das erfindungsgemäße Verfahren zu verwendende Verbindungen 2) besitzen pro Molekül mindestens einmal die Struktur

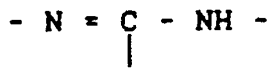

(I).

Bevorzugte Verbindungen 2) sind schwefelfrei.

Bevorzugte Verbindungen 2) entsprechen der Formel

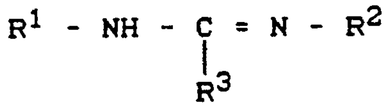

(II)

worin

$R^1$ bis $R^3$ unabhängig voneinander ein Wasserstoffatom, einen Alkylrest mit 1 bis 8 C-Atomen, einen Cycloalkylrest mit 5 bis 10 C-Atomen, einen Aralkylrest mit 7 bis 12 C-Atomen, einen Arylrest mit 6 bis 15 C-Atomen oder einen heterocyclischen Rest mit 5 bis 10 C-Atomen und 1 bis 2 Sauerstoff-, Stickstoff- und/oder Schwefelatomen bedeuten.

Beispiele für solche Amidine II sind Formamidin, Acetamidin, N,N'-Diphenylacetamidin, Caproylamidin, Benzamidin, N,H-Dimethylbenzamidin, N,N-Di-n-butylbenzamidin, Benzyliminocaprolactam, n-Butyl- und tert.-Butyliminocaprolactam, N-Ethyl-N'-benzylbenzamidin, N-tert.-Butyl-N'-benzylacetamidin und N-n-Butylamino-N'-benzylacetamidin.

Eine besonders interessante Spezies der Amidine 2) sind "cyclische Amidine", d.h. solche Verbindungen, deren Stickstoffatome Glieder eines Ringsystems sind. Die Herstellung solcher cyclischen Amidine ist bei S. Patai, Chemistry of Amidines and Amidates", John Wiley & Sons, New York 1975, S. 283-348, beschrieben.

Solche bevorzugten cyclischen Amidine 2) umfassen auch Imidazoline der Formel

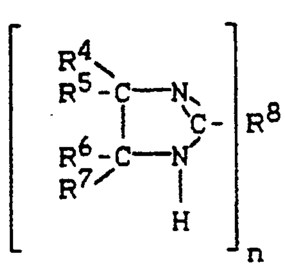

(III)

worin

$R^4$ bis $R^7$ ein Wasserstoffatom, einen Alkyl- oder Alkylenrest mit 1 bis 6 C-Atomen, einen Cycloalkylrest mit 5 bis 10 C-Atomen, einen Aralkylrest mit 7 bis 12 C-Atomen, einen Arylrest mit 6 bis 15 C-Atomen oder einen heterocyclischen Rest mit 5 bis 10 C-Atomen und 1 bis 2 Sauerstoff-, Stickstoff- und/oder Schwefelatomen und

R8 ein Wasserstoffatom, einen Alkyl- oder Alkylenrest mit 1 bis 6 C-Atomen, einen Aryl- oder Arylenrest mit 6 bis 18 C-Atomen, die jeweils durch Alkyl-, Cycloalkyl-, Aralkyl-, Arylreste oder heterocyclische Reste (wie für $R^4$ bis $R^7$ definiert) substituiert sein können, und

n 1 oder 2 bedeuten.

Beispiele für Imidazoline III sind 2-Phenylimidazolin, 2 Phenyl-4-methylimidazolin, 2-(m-Tolyl)-4-methylimidazolin, 2-(m-Pyridyl)-imidazolin, 1,4-Tetramethylen-bis-(4-methyl-imidazolin-2), 2-Methyl-imidazolin, 2,4-Dimethyl-imidazolin, 2-Ethyl-imidazolin, 2-Ethyl-4-methyl-imidazolin, 2-Benzyl-imidazolin, 2-(o-Tolyl)-imidazolin, 2-(p-Tolyl)-imidazolin, Tetramethylen-bis-imidazolin, 1,1,3-Trimethyl-1,4-tetramethylen-bis-imidazolin, 1,1,3-Trimethyl-1,4-tetramethylen-bis-4-methyl-imidazolin, 1,3,3-Trimethyl-1,4-tetramethylen-bis-4-methylimidazolin, 1,2-Phenylen-bis-imidazolin, 1,3-Phenylen-bis-4-methyl-imidazolin. Es können auch Gemische der Imidazolin-Derivate eingesetzt werden; besonders bevorzugt werden 2-Phenyl-imidazolin und 2-Methylimidazolin.

Weitere bevorzugte cyclische Amidine 2) umfassen Tetrahydropyrimidine der Formel

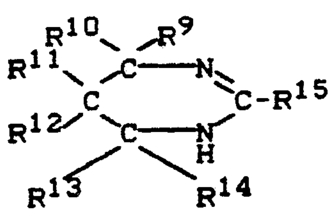

(IV)

$R^9$ bis $R^{15}$ unabhängig voneinander ein Wasserstoffatom, einen Alkylrest mit 1 bis 6 C-Atomen, einen Cycloalkylrest mit 5 bis 10 C-Atomen, einen Aralkylrest mit 7 bis 12 C-Atomen und einen Arylrest mit 6 bis 15 C-Atomen bedeuten,

wobei auch zwei geminale oder vicinale Substituenten zusammen mit dem Kohlenstoff, an dem sie sitzen, einen cycloaliphatischen Ring mit 5 bis 6 C-Atomen bilden können`

Beispiele für Tetrahydropyrimidine IV sind 2-Methyl-te-trahydropyrimidin, 2,4-, 2,5- und 2,6-Dimethyltetrahydropyrimidin, 2-Ethyltetrahydropyrimidin, 2-Ethyl-4-methyl-tetrahydropyrimidin, 2-Benzyl-tetrahydropyrimidin, 2-Phenyl-tetrahydropyrimidin, 2-Phenyl-4-methyl-, -5-methyl- und -6-methyl-tetrahydropyrimidin, 1,8-Diazabicyclo[5.4.0]undec-7-en (DBU), 1,5-Diazabicyclo-[4.3` 0]non-5-en (DBN), 2,4-Diaza-3-phenyl-7,9,9- und -7,7,9-trimethylbicyclo[4.3.0]nonen-2, 2,4-Diaza-3-methyl-7,9,9-und -7,7,9-trimethylbicyclo[4.3.0]-nonen-2 und Gemische dieser Tetrahydropyrimidine.

Die flüssigen Verbindungen des Typs 2) können mit den in der Kautschukindustrie üblichen Adsorbern (z` B. Ruß) zu einem festen Adsorbat verfestigt werden (z.B. 10-30 Gew`-% Flüssigkeit auf 90-70 Gew.-% Ruß vom Typ N762). Diese verfestigten Formen (Adsorbate) von 2) können leicht mit den anderen festen Zutaten in üblicher Weise vermischt werden.

Der Zusatz von Verbindungen 2) zum Polychloropren kann bei entsprechend schonender Trocknung schon in der Latexphase erfolgen. Üblicherweise wird man Amidin 2) aber erst während des Compoundierens mit den anderen Füllstoffen und Hilfsmitteln zusetzen. Übliche "andere Füllstoffe und Hilfsmitteln" umfassen z.B. dunkle Füllstoffe wie aktive und inaktive Ruße ebenso wie helle Füllstoffe wie Kieselsäure, Kaolin, Kreide, Weichmacher, Stabilisatoren gegen thermischen und/oder oxidativen Angriff, Treibmittel und Verarbeitungshilfsmittel wie Faktis, Stearinsäure, Polyethylenwachs und Vaseline.

Das Mischen der Komponenten kann auf üblichen Mischaggregaten erfolgen. Bevorzugte Mischaggregate sind die in der Kautschukindustrie üblichen Kneter, Walzen, Innenmischer und Mischextruder, die in der Regel mit Scherraten von 1 bis 1000 sec $^{-1}$, vorzugsweise 1 bis 200 sec $^{-1}$ arbeiten.

Die Vulkanisation kann bei Temperaturen von 20 bis 250° C, vorzugsweise 140 bis 210° C, gegebenenfalls unter einem Druck von 10 bis 200 bar, erfolgen, im Anschluß an die Vulkanisation können die Vulkanisate durch Lagerung bei höherer Temperatur getempert werden.

"Vulkanisiert" im Sinne der Erfindung bedeutet, daß bei 10-stündiger Extraktion im Soxhlet-Aufsatz mit Toluol als Extraktionsmittel weniger als 10, vorzugsweise weniger als 5 Gew.-%, bezogen auf Kautschuk, extrahierbar ist.

Die erfindungsgemäß hergestellten Vulkanisate können überall dort mit Vorteil eingesetzt werden, wo

hohe thermische Belastung und dynamische Beanspruchung das Risiko frühzeitiger Alterung mit sich bringen, beispielsweise also Achsmanschetten, Keilriemen, Zahnriemen, Fördergurte, Puffer, Federelemente sowie Kühlschläuche.

## Beispiele

Ausgangskomponenten

A. 1.8-Diazabicyclo[5.4.0]undec-7-en (DBN) wurde nach Oedinger et al., Synthesis 1972, S. 591 - 598 hergestellt. Man erhielt eine farblose Flüssigkeit, Kp.: 98-99 °C/14 mbar.

B. 2,4-Dimethylimidazolin

C. 2-Phenyl-2-imidazolin

D. N-Phenylacetamidin

Polychloropren E

In den ersten Reaktor einer Polymerisationskaskade, bestehend aus 7 gleichen Reaktoren mit einem Volumen von je 50 Liter werden die wäßrige Phase (W) und die Monomerphase (M) über eine Meß- und Regelapparatur in stets konstantem Verhältnis sowie die Aktivatorphase (A) eingefahren. Die mittlere Verweilzeit je Kessel beträgt 25 Minuten.

**(M) = Monomerphase:**

| | |
|---|---|
| Chloropren | 100,0 Teile |
| n-Dodecylmercaptan | 0,22 Teile |
| Phenothiazin | 0,015 Teile |

**(W) = wäßrige Phase:**

| | |
|---|---|
| Entsalztes Wasser | 130,0 Teile |
| Natriumsalz der disproportionierten Abietinsäure | 2,8 Teile |
| Natriumsalz eines Kondensationproduktes aus Naphthalinsulfonsäure und Formaldehyd | 0,7 Teile |
| Kaliumhydroxid | 0,63 Teile |

**(A) = Aktivatorphase:**

| | |
|---|---|
| 1 gew.-%ige wäßrige Formamidinsulfinsäurelösung | 0,05 Teile |

Bei einer Innentemperatur von 40 °C springt die Reaktion leicht an. Durch eine Außenkühlung wird die freiwerdende Polymerisationswärme abgeführt und die Polymerisationstemperatur auf 45 °C gehalten. Bei einem Monomerumsatz von 65 % wird die Reaktion durch Zugabe von Phenothiazin abgebrochen. Das restliche Monomere wird durch Wasserdampfdestillation aus dem Polymeren entfernt und der Polymerlatex

nach Senken des pH-Wertes auf 7,0 auf einer Kühlwalze ausgefroren und isoliert. Die Mooney-Viskosität beträgt 48 (ML 1+4) 100° C.

Polychloropren F (schwefelmodifiziert)

In einem 20 1-Kolben wurde die wäßrige Phase bestehend aus 120 Teilen entsalztem Wasser, 3,25 Teilen unmodifizierterHarzsäure auf Wurzelharzbasis, 1,1 Teilen Kaliumhydroxid, 0,7 Teilen des Na-Salzes des Kondensationsproduktes aus Naphthalinsulfonsäure und Formaldehyd und 0,03 Teilen Na-Salz der Anthrachinon-β-sulfonsäure vorgelegt, mit Stickstoff gespült und auf 40° C aufgeheizt. Dann wurden 100 Teile mit Stickstoff gespültes Chloropren zugegeben. Nach Einstellung einer Temperatur von 40° C wurden 0,3 Teile Schwefel (50 %ige wäßrige Dispersion) zugegeben. Dann wurden 0,9 Teile Na-Dibutyldithiocarbamat (30 %ige wäßrige Lösung) zugesetzt.

Die Aktivierung erfolgte mit 0,03 Teilen $K_2S_2O_8$ in Form einer mit Stickstoff gespülten 4 %igen wäßrigen $K_2S_2O_8$-Lösung. Während des Versuches wurden $2{,}25 \cdot 10^{-3}$ Teile $K_2S_2O_8$ pro Minute in Form dieser wäßrigen und mit Stickstoff gespülten Persulfatlösung zudosiert.

Der Verlauf der Polymerisation wurde gravimetrisch an gezogenen Proben verfolgt. Bei einem Monomerumsatz von 66 % wurde mit 0,03 Teilen, bezogen auf Latex, einer 2,5 %igen Lösung von Diethylhydroxylamin abgestoppt und der Latex mit 1,0 Teil Tetraethylthiuramdisulfid (TETD) versetzt (10 %ige toluolische Dispersion).

Der Latex wurde auf ca. 500 ppm Restchloropren (bezogen auf Latex) entgast, der entgaste Latex mit 20 %iger Essigsäure auf pH 6 gestellt, das Polymere durch Gefrierkoagulation isoliert, mit entsalztem Wasser gewaschen und bis zu einer Restfeuchte von ≦0,5 % getrocknet. Das Polymere wies eine Mooney-Viskosität von 47 (ML 1+4) 100° C auf.

Polychloropren G (Chloropren/1-Chlorbutadien-Copolymerisat)

Eine Monomermischung aus 98 Teilen Chloropren und 2 Teilen 1-Chlorbutadien wurde analog der obigen Vorschrift für Polychloropren E polymerisiert. Die Mooney-Viskosität des erhaltenen Copolymerisats betrug 46 (ML 1+4) 100° C.

Vulkanisat-Prüfung

Die Mischungsherstellung, Vulkanisation und Vulkanisatprüfung erfolgten unter Anlehnung an die ISO-Vorschrift 2475-1975 (E).

Vor der eigentlichen Mischungsherstellung wurden 1000 g Polychloropren 6 Min. lang mastiziert, wobei der Walzenspalt so eingestellt war, daß sich ein Wulst mit einem Durchmesser von ca. 12 mm bildete. Nach der Mastikation wurden 800 g Kautschuk abgenommen und mindestens 10, höchstens 120 Min. lang gelagert.

Walzwerk 200 x 390 mm
Temperatur 45 - 55° C
Friktion 1 : 1,4 (24 : 34 U/min)

Vor Beginn des Mischens wurde das auf 30° C eingestellte Walzwerk mittels Abfallkautschuk auf die angegebene Untergrenze der Betriebstemperatur erwärmt.

Prüfmischung

Mischungsbestandteile:

| | |
|---|---:|
| Polychloropren | 100,00 g |
| Stearinsäure | 0,50 g |
| Magnesiumoxid | variabel |
| Phenyl-β-naphthylamin | 2,00 g |
| Ruß N 762 | 30,00 g |
| Zinkoxid | 5,00 g |
| Ethylenthioharnstoff | variabel |
| DBN | variabel |
| | 137,50 g |

Mischfolge und -zeiten entsprachen den obigen Angaben. Nach einer Mischzeit von 13 Min. wurde das Walzfell unter wechselseitigem Einschneiden (dreimal links und dreimal recht) 1 Min. bearbeitet und innerhalb weiterer 2 Min. sechsmal durch einen 0,8 mm weiten Walzenspalt gezogen, so daß sich eine Gesamtmischzeit von 16 Min. ergab.

Die Mischung wurde bis zur Vulkanisation über Nacht gelagert.

Vulkanisationsbedingungen:

| | |
|---|---|
| Temperatur | 150° C, 170° C und 190° C |
| Zeit | 40 Min., 5/10 Min. |

Die Prüfdaten wurden nach den entsprechenden DIN-Vorschriften für Weichgummi ermittelt.

I. Einfluß verschiedener Metalloxide auf das Vulkanisationsverhalten

| Beispiel: | 1* | 2* | 3* | 4* | 5* | 6 |
|---|---|---|---|---|---|---|
| Polychloropren E | 100,0 | | | | | |
| Stearinsäure | 0,5 | | | | | |
| Phenyl-β-naphthylamin | 2,0 | | | | | |
| Ruß N 762 | 30,0 | | | | | |
| Zinkoxid | 5,0 | | | | | |
| Ethylenthioharnstoff | 0,5 | | | | | |
| Magnesiumoxid | - | 4 | - | - | - | - |
| Calciumoxid | - | - | 4 | - | - | - |
| Aluminiumhydroxid | - | - | - | 4 | - | - |
| Magnesiumhydroxid | - | - | - | - | 4 | - |
| DBN | - | - | - | - | - | 1 |

* = Vergleichsbeispiele

Mischungseigenschaften:

Vulkameter (BAYER-FRANK, Laufzeit 40 Min.)

| Beispiel: | 1* | 2* | 3* | 4* | 5* | 6 |
|---|---|---|---|---|---|---|
| Temperatur 150° C | | | | | | |
| $T_{10}$ (min) | 2 | 3 | 2 | 2 | 2 | 3 |
| $T_{80}$ (min) | 10 | 18 | 8 | 10 | 12 | 17 |
| $T_{90}$ (min) | 16 | 26 | 15 | 16 | 21 | 26 |
| Schubmodul-Maximum (N) | 25 | 39 | 22 | 25 | 28 | 39 |
| Temperatur 170° C | | | | | | |
| $T_{10}$ (min) | 1 | 2 | 1 | 1 | 1 | 2 |
| $T_{80}$ (min) | 4 | 8 | 14 | 4 | 6 | 7 |
| $T_{90}$ (min) | 11 | 14 | 27 | 11 | 14 | 10 |
| Schubmodul-Maximum (N) | 25 | 42 | 25 | 25 | 29 | 39 |
| Temperatur 190° C | | | | | | |
| $T_{10}$ (min) | 1 | 1 | 1 | 1 | 1 | 1 |
| $T_{80}$ (min) | 3 | 4 | 10 | 3 | 4 | 3 |
| $T_{90}$ (min) | 8 | 10 | 25 | 7 | 9 | 5 |
| Schubmodul-Maximum (N) | 24 | 44 | 28 | 25 | 29 | 40 |

* = Vergleichsbeispiele

Der erfindungsgemäße Zusatz (Beispiel 6) bewirkt im Vergleich zum MgO-haltigen Vergleichszusatz (Beispiel 2) bei 150° C ein identisches, bei höherer Temperatur ein deutlich schnelleres Vulkanisationsverhalten, wobei sich die Netzwerkdichte des Vulkanisats, gemessen am Schubmodul-Maximum, gegenüber dem MgO-haltigen Ansatz nicht ändert. Dies ist ein erheblicher Vorteil. Fehlt MgO (Beispiel 1) oder wird es durch andere Metalloxide ersetzt (Beispiele 3 bis 5), so führt dies in allen Fällen zu einer Untervernetzung, ersichtlich am niedrigen Wert des Schubmoduls.

II. Einfluß auf die Vulkanisatwerte und das Alterungsverhalten
Vulkanisat (10 Min. 190° C / Werte gemessen am S-II-Stab)

| Beispiel: | | 1* | 2* | 6 |
|---|---|---|---|---|
| Zugfestigkeit | (MPa) | 17,2 | 16,8 | 18,4 |
| Bruchdehnung | (%) | 510 | 390 | 400 |
| Spannung b. 100 % D. | (MPa) | 1,5 | 2,3 | 2,1 |
| Spannung b. 300 % D. | (MPa) | 8,1 | 12,4 | 13,0 |
| Härte/23° C | (Shore A) | 54 | 62 | 60 |
| Elastizität | (%) | 49 | 50 | 52 |

Heißluftalterung (21 Tage 100° C)

Änderung der mechanischen Werte:

| | | | | |
|---|---|---|---|---|
| Zugfestigkeit | (%) | -8 | -20 | -10 |
| Bruchdehnung | (%) | -26 | -35 | -10 |
| Spannung (100) | (%) | 115 | 120 | 15 |
| Härte | (Shore A) | 11 | 9 | 2 |

* = Vergleichsbeispiele

Wie der Vergleich zeigt, führt das MgO-freie Vernetzersystem des Beispiels 1 zu einem schlechten mechanischen Wertebild des Vulkanisats.

Der Austausch von MgO des Beispiels 2 durch DBN in Beispiel 6 führt zu einer höheren Zugfestigkeit bei sonst vergleichbaren mechanischen Vulkanisatdaten sowie zu einem erheblich günstigeren Verhalten bei Alterung, hier gezeigt am Beispiel der Heißluftlagerung bei 100° C. (Gerade der Anstieg von Härte und Spannungswert am alternden Gummiartikel ist ein wesentlicher Faktor für seinen vorzeitigen Ausfall).

III. Vulkanisatwerte in Abhängigkeit vom Vernetzersystem

| Beispiel: | 7* | 8* | 9 | 10 | 11* |
|---|---|---|---|---|---|
| Polychloropren G | 100,0) | → | | | |
| Stearinsäure | 0,5) | → | | | |
| Phenyl-β-naphthylamin | 2,0) | → | | | |
| Ruß N 762 | 30,0) | → | | | |
| Zinkoxid | 5,0) | → | | | |
| ETU | 0,5) | → | | | |
| Magnesiumoxid | 4,0 | 4,0 | - | - | - |
| DBN | - | 1,0 | 1,0 | 0,5 | - |
| Vulkameter (190° C, 40 Min. / BAYER-FRANK) | | | | | |
| Schubmodul-Maximum (N) | 49 | 45 | 40 | 37 | 25 |
| Vulkanisat (190° C, 10 Min. / Messung am Ring) | | | | | |
| Zugfestigkeit | 16,7 | 16,7 | 17,5 | 20,3 | 18,0 |
| Bruchdehnung | 410 | 400 | 430 | 470 | 550 |
| Spannung b.100% D(MPa) | 1,8 | 2,0 | 1,6 | 1,6 | 1,1 |
| Spannung b.300% D(MPa) | 11,0 | 12,7 | 10,8 | 10,5 | 6,7 |
| Härte/23° C (Shore A) | 61 | 62 | 59 | 58 | 54 |
| Heißluftlagerung (14 Tage, 100° C) | | | | | |
| Dehnungsabfall in % | 18 | 13 | 10 | 10 | 25 |
| Spannungsanstieg in % | 50 | 40 | 30 | 35 | 100 |
| Härte-Anstieg in Shore A | 5 | 4 | 2 | 3 | 6 |

* = Vergleichsbeispiele

Gegenüber dem Standard-Vernetzersystem in Beispiel 7 bringt der Zusatz von DBN in Abwesenheit von MgO eine deutliche Verbesserung des mechanischen Wertebildes vor und nach Alterung (Beispiele 9, 10).

IV. Einfluß des Vernetzers auf schwefelmodifiziertes Polychloropren

| Beispiel: | 12* | 13* | 14 |
|---|---|---|---|
| Polychloropren F | 100,0) | | |
| Stearinsäure | 0,5) | | |
| Phenyl-β-naphthylamin | 2,0) ⟶ | | |
| Ruß N 762 | 30,0) | | |
| Zinkoxid | 5,0) | | |
| Magnesiumoxid | - | 4,0 | - |
| DBN | - | - | 1,0 |

Vulkanisation (190° C, 40 Min. / BAYER-FRANK-Gerät)

| | | | |
|---|---|---|---|
| $T_{10}$ (Min.) | 1,1 | 1,4 | 1,2 |
| $T_{80}$ (Min.) | 2,0 | 3,0 | 2,0 |
| $T_{90}$ (Min.) | 3,0 | 4,0 | 3,0 |
| Schubmodul-Maximum (N) | 27 | 29 | 32 |

Vulkanisat (190° C 5/10 Min. / Werte am S-II-Stab)

| Beispiel: | 12* | 12* | 13* | 13* | 14 | 14 |
|---|---|---|---|---|---|---|
| Vulk.-Zeit | 5 | 10 | 5 | 10 | 5 | 10 |
| Zugfestigkeit (MPa) | 29,0 | 26,6 | 27,3 | 26,0 | 25,8 | 28,5 |
| Bruchdehnung (%) | 840 | 770 | 720 | 640 | 670 | 710 |
| Spannung b.100%D. (MPa) | 1,4 | 1,3 | 1,9 | 2,1 | 1,6 | 1,6 |
| Spannung b.100%D. (MPa) | 6,0 | 6,2 | 8,7 | 9,5 | 8,6 | 8,6 |

Alterung am Vulkanisat 190° C, 5 Min.:
7 Tage 125° C, Messung am Ring

| | | | | | |
|---|---|---|---|---|---|
| Spannung 100% D. (MPa) | 0 Tage | 1,7 | - | 1,5 | - |
| | 7 Tage | 6,4 | - | 3,8 | - |
| Spannungsanstieg in % | | 276 | - | 153 | - |
| Härte/23° C (Shore A) | 0 Tage | 60 | - | 57 | - |
| | 7 Tage | 76 | - | 66 | - |
| Härte-Änderung in % | | 27 | - | 16 | - |

* = Vergleichsbeispiele

Schwefelmodifiziertes Polychloropren wird besonders dann eingesetzt, wenn eine gute Mastikation während des Mischvorganges nötig ist, eine thioharnstofffreie Vulkanisation erwünscht ist und Artikel mit hoher dynamischer Belastung hergestellt werden sollen.

Wie man sieht, verändern sich die mechanischen Werte bei den erfindungsgemäßen Beispielen bei steigender Vulkanisationszeit nicht (Spannung) oder verbessern sich (Festigkeit, Dehnung). Eine Alterung unter verschärften Bedingungen bei 125° C statt 100° C läßt die Effektivität von DBN gegenüber dem herkömmlichen Vernetzersystem besonders deutlich hervortreten.

V. Einfluß verschiedener Verbindungen mit Amidinstruktur auf das Alterungsverhalten

Die Mischungs- und Vulkanisationsbedingungen waren die gleichen wie in Beispiel 6 beschrieben.

Änderung der mechanischen Werte

Vulkanisation (190° C/10 Min.) nach Heißluftlagerung (21 Tage/100° C)

| Beispiel | 6 | 15 | 16 | 17 |
|---|---|---|---|---|
| Amidin A | 1 | - | - | - |
| B | - | 1 | - | - |
| C | - | - | 1 | - |
| D | - | - | - | 1 |

| | | | | |
|---|---|---|---|---|
| Bruchdehnung (%) | -10 | - 5 | -15 | -10 |
| Spannung (100 %D) (MPa) | 15 | 25 | 20 | 20 |
| Härte/23° C (Shore A) | 2 | 3 | 3 | 4 |

## Ansprüche

1. Verfahren zur Vulkanisation von Polychloropren in Gegenwart von
   1) 0,5 bis 20 Gew.-% Metalloxid und
   2) organischem Vulkanisationsbeschleuniger,
   
   dadurch gekennzeichnet, daß
   a) das Metalloxid 1) frei von Magnesiumoxid ist und
   b) der organische Vulkanisationsbeschleuniger 0,1 bis 6 Gew.-% mindestens einer Verbindung mit Amidinstruktur enthält,
   
   wobei sich die Prozentangaben jeweils auf Polychloropren beziehen.

2. Verfahren nach Anspruch 1, wonach das Metall des Metalloxids aus den Gruppen IIa und IIb des Periodensystems ausgewählt ist.

3. Verfahren nach Anspruch 1, wonach das Metalloxid 1) Zinkoxid ist.

4. Verfahren nach Ansprüchen 1-3, wobei der Vulkanisationsbeschleuniger 2) 0,2 bis 0,6 Gew.-% mindestens einer Verbindung mit Amidinstruktur enthält.

5. Verfahren nach Ansprüchen 1-4, wonach das Amidin aus der Gruppe bestehend aus DBN und DBU ausgewählt ist.